(19) Europäisches Patentamt
European Patent Office
Office européen des brevets

(11) **EP 3 192 383 B1**

(12) **EUROPEAN PATENT SPECIFICATION**

(45) Date of publication and mention
of the grant of the patent:
**13.11.2019 Bulletin 2019/46**

(51) Int Cl.:
*A41D 13/01* (2006.01)          *G08B 5/00* (2006.01)
*B62J 6/04* (2006.01)           *B62J 99/00* (2009.01)

(21) Application number: **16150871.8**

(22) Date of filing: **12.01.2016**

(54) **AUTONOMOUS REMOVABLE SIGNALLING SYSTEM FOR USERS OF CABIN-LESS VEHICLES**

AUTONOME ABNEHMBARE SIGNALANLAGE FÜR NUTZER VON FAHRZEUGEN OHNE KABINE

SYSTÈME AUTONOME DE SIGNALISATION AMOVIBLE POUR LES UTILISATEURS DE VÉHICULES SANS CABINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.07.2017 Bulletin 2017/29**

(73) Proprietor: **Lobato Raposo, Francisco**
**49012 Zamora (ES)**

(72) Inventor: **Lobato Raposo, Francisco**
**49012 Zamora (ES)**

(74) Representative: **De la Fuente Fernandez, Dionisio**
**Invicta Patents and Trade Marks, S.L.**
**Plaza de Castilla, 3 Bis Local**
**28046 Madrid (ES)**

(56) References cited:
WO-A1-2005/020731     WO-A1-2011/061663
US-A1- 2007 063 831     US-B1- 9 096 174

Remarks:
The file contains technical information submitted after the application was filed and not included in this specification

**Description**

**Background of the invention**

The lightning devices of vehicles and motorcycles are intended to see and be seen, as well as to signal the manoeuvres to be performed.

The lighting system is particularly suitable when moving at night or in conditions where visibility is reduced due to fog, rain or other circumstances. Meanwhile, the optical signalling system comprises the set of each and every one of the devices that advise of the presence of the vehicles to other users as well as the manoeuvres that will be performed by them.

Different types of lights on vehicles and motorcycles as well as functionalities can be distinguished. Thus, for example, reflective devices have the functionality to be seen at a minimum distance and reflect other's light to point out the vehicle's position. Lights can be placed on the front end, red lights on the rear end or yellow on the sides. Emergency lights cause the simultaneous operation of all the vehicle's flashing lights, signalling and warning other drivers of the presence of the vehicle, typically in a situation of accident or danger.

All these existing lights on motor vehicles and motorcycles signal indicate and warn of the presence of the vehicle as well as its direction and the way they will move forward. However, when it comes to bicycles, motorcycles, scooters, segway personal transporters and wheelchairs, in general, these lights are less visible, and additionally the user is less protected in principle of how the user would be in an enclosed vehicle. The width of a car allows for any flashing or braking light, etc. to be seen, while motorcycles, because of their smaller width and spacing of lights, have less area to include these indications and signalling lights. This particularly affects to the distinction of manoeuvres of turning left and turning right due to the proximity between the light emitting points for the indication of such manoeuvres. The same applies to the emergency lighting.

Patent document US 6388422 discloses apparel and sensor coverings comprising a material suitable for use therein and a laminate integrated therein, the laminate comprising a plurality of layers comprising an energy conversion means for delivering electrical energy, electrical energy storing means, and charge management and control circuitry. The invention is used to power electronic applications either integrated with the charge management and control circuitry or incorporated into the laminate as a separate layer to create "smart apparel" and "smart sensors".

The document also discloses that external electronic devices and various types of sensors can be connected and powered using one or more outlets integrated into the material. An antenna also integrated into the material allows communication with other wearers of this "smart apparel", and between "smart sensors", with local command and control centres on the ground or in the air and with distant headquarters via satellite(s).

The laminate for use in the invention is made of layers that are laminated together to form the final laminate. The laminate is sufficiently flexible that it can be unobtrusively integrated into the material used for making the apparel (and worn as part thereof) or for sensor covers. The sensor cover can also be comprised solely of the laminate.

The electrical energy means of the invention is the storing of, preferably, a secondary, i.e., a rechargeable battery, such as a battery and, more specifically, a polymer battery or a lithium-ion battery.

Integration of the laminate into the material can be done in any standard manner, e.g., quilt-like, and at any place on the sensor cover or on the apparel, e.g., into the front and/or back of the jacket and/or the sleeve(s), to meet the need of a particular application

Patent application GB 2382297 discloses a jacket that incorporates within its structure, and set on the exterior surface, light emitting diodes that are controlled by a microprocessor contained within the structure of the jacket, which enables the light emitting diodes to turn on and off according to a predetermined sequence. The system also comprises a power source for the electronic control system also being contained with the structure of the jacket and has additional power input devices that enable the light emitting diodes to be controlled by external power sources.

The document WO2011061663 reveals a signalling apparatus, in particular for motorcyclists, comprising: a supporting structure (2), including or associable with a garment (2a) that can be worn by a motorcyclist; at least one first assembly (10) of light-signalling devices, mounted on said supporting structure (2), in such a manner that it can be seen when said garment (2a) is worn by said motorcyclist; a processing unit (50) connected to said first assembly (10) of light-signalling devices and configured for receiving a signal (100) representative of a deceleration or braking to which said supporting structure (2) has been submitted; comparing said signal (100) with a first threshold (S1); activating said first assembly (10) of light-signalling devices if said deceleration is, in module, greater than said first threshold (S1).

The document WO2005020731 reveals alighting unit (4) has at least one electroluminescent strip (16, 17, 18) adapted to provide a desired safety function and being attachable to an outer surface of a support structure (24). Such a lighting unit may be part of an indicator lamp assembly for a motor vehicle that further includes a transmitter (25) adapted for coupling to at least one lamp circuit of the motor vehicle for transmitting a wireless actuation signal upon activation of said circuit, and a receiver (21) adapted for coupling to the lighting unit for receiving the wireless actuation signal and being responsive thereto for operating at least one electroluminescent strip. The signal indicators can be attached to clothing or to a helmet of a motorcyclist.

Other documents like the one shown in the application US2007063831 reveals a signaling system for a motorcycle or bicycle providing a light indication to other motorists. An indication mechanism is attached to a garment of the rider. The indication mechanism has at least two banks of LEDs arrays and a wireless radio receiver. A signal interface is linked to the wiring system of the motorcycle light system. The signal interface intercepts signals transmitted on the wiring system of the motorcycle light system.

In the present invention, the main sheet (100) consistent of a core and a coating, wherein the core is formed by a preferably metallic or plastic foil, whereas the coating may be silicone, plastic, rubber or the like and wherein the main sheet allows the wearer to fit it to the trunk of the body through a previous winding and bending process of said main sheet (100), and includes a signalling device with an integrated circuit, consisting of at least a wireless receiver element; at least one microcontroller and a plurality of signalling elements (105).

One advantage of this device when compared to its prior art is that it manages to improve the efficiency in the signalling and user location for cabin-less vehicle users, both when in traffic and off traffic in case of accidents, falls or any similar case, which was not covered with what was proposed in the prior art.

Another advantage of the system of the present invention over the aforementioned documents is, firstable, that the user does not include the device within any apparel, and this would avoid the presence of apparel with special fabrics, such as the late generation photovoltaic fabrics required to supply enough power to supply the lighting elements.

Another advantage of the device is that it can be formed by a blank of a material comprising a main sheet consisting of a core and a coating, wherein the core consists of a metal, plastic or similar sheet, while the coating may be silicone, plastic, rubber or the like, this material allows the holder thereof prompt and appropriate adjustment to the body trunk. This adjustment is achieved through a prior process of rolling and bending said main sheet without the need to include a guide on the user jacket.

Another advantage is that in case of emergency the vehicle is liable of having a sensing device for falls and a GPS-enabled emergency locator, that is, a device that through sensing the inclination angle of the motorcycle and / or other factors, can detect the status of the same and if it has suffered an accident or similar circumstance.

## Description of the invention

The disclosed invention proposes the implementation of a device such as a flexible sheet in contact with a plurality of elements arranged in the vehicle making up a system and wherein said sheet is placed in the user's body of a motor or motor-less cabin-less vehicle such as motorcycles, bicycles, scooters, segway personal transporters, wheelchairs, etc., allowing signalling and location of the user in a visible manner both in traffic and in case of accident, and both with the engine running or stopped, the device being a very flexible sheet (100) comprising an integrated circuit, a wireless receiver element, a microprocessor, an emitter and a plurality of signal elements (105) connected by a printed circuit. The signal elements (105) are placed so that the signals produced are consistent with the indication of the movement being executed. For example, the signal elements (105) on the right will light up when the right indicator is used, and an indication of the direction of the motorcycle will be sequential, and others.

The sheet with its components is essentially inserted into the jacket, but it also could be included in other items the user; means for inserting the sheet is by means of two external guides placed on the garment of the user, allowing the removal of the sheet when it is not being used. In any part of this sheet a device to produce sound, light signals or any other can be implemented that allow to know the direction that the user of the motorcycle will take and its quick location in case of an accident.

Thus the invention relates to the signalling system, preferably for motorcycle and bicycle users, comprising integrated light and sound elements on a flexible sheet, so they are activated as a function of the vehicle manoeuvres and signalling the user's intention as to the driving manoeuvre to be performed, simultaneously and additionally to said lighting devices on the motorcycle and always in coordination with them. This means being able to clearly see by means of the user the direction to be taken, whether a turn is going to be made or following straight through, if a progressive or brisk braking is going to be made, or even, in case of an accident, to be able to locate the user fast by means of lighting or acoustic signals that can be produced. These elements integrated in the device will act in sync and at the same time with the controls of the motorcycle, that is, for example, when activating the right turn indicator, a bright display is activated in the right side of the used apparel, such as the right boot, the right side of the helmet or the right side of the jacket or pants.

Thus the system for users of cabin-less vehicles includes lighting elements of any kind, whether rows of energy saving and high light output LEDs, or any other element built-in the apparel capable of fulfilling the function of warning of the direction to be taken or user's location. This lighting must be conveniently sequential in certain cases so that the direction to be taken or being taken is clearly marked. Also for the alarm signal a simultaneous flashing signal will have to be placed in.

A small battery will be available, easily transportable and easily integrable in the apparel in the same way as the remainder elements, and will have a high energy storage capacity. It will also include an element for network connection that will be used to recharge the battery or this will be accomplished by means of any last generation power source charging system by proximity.

Thus if the vehicle is a motor vehicle, when a signal is activated, such as, for example, a direction indicator by means of a switch at the handlebar, a signal is sent over a wireless emitter device located in contact with the switch itself to a wireless receiver device implemented in the user sheet. Then a microcontroller integrated in the sheet is able to receive the information, process it and direct it to a final wireless emitting device that sends the signal or trigger order to the signal element also implemented in said sheet.

The energy required for activating the emitter is easily extracted from the electric circuit of the motorcycle, so that in principle an auxiliary storage battery and energy supply system is not required.

If the vehicle is a motor vehicle there needs to be a perfect synchronization of the activation times of the light signal originating from the vehicle and the signal of the luminous element of the user equipment. To this end it is required that all of the lights both at the vehicle and at the user's apparel do have the same characteristics in terms of rate, waiting time and duration. In order to achieve a distinct effect in respect to the direction of the manoeuvre and as users of motorcycles have little separation between the two most external pints of light signalling, which does not occur in automobiles, it is advisable to use a sequencing system with regard to the order and direction. This aspect is required to be able to assess perfectly and without error the direction of the manoeuvre, left or right.

The signal sheet is systematically in contact with a plurality of elements placed on the vehicle that allow to determine the manoeuvre of the user and send the signal of said manoeuvre to said sheet placed on the body of the user.

**Description of the drawings**

To complete the description being made and in order to help a better understanding of the invention's characteristics, according to a preferred example of practical embodiment thereof, attached herewith as an integral part of said description there is a set of drawings where with illustrative and non limitative character, the following has been represented:

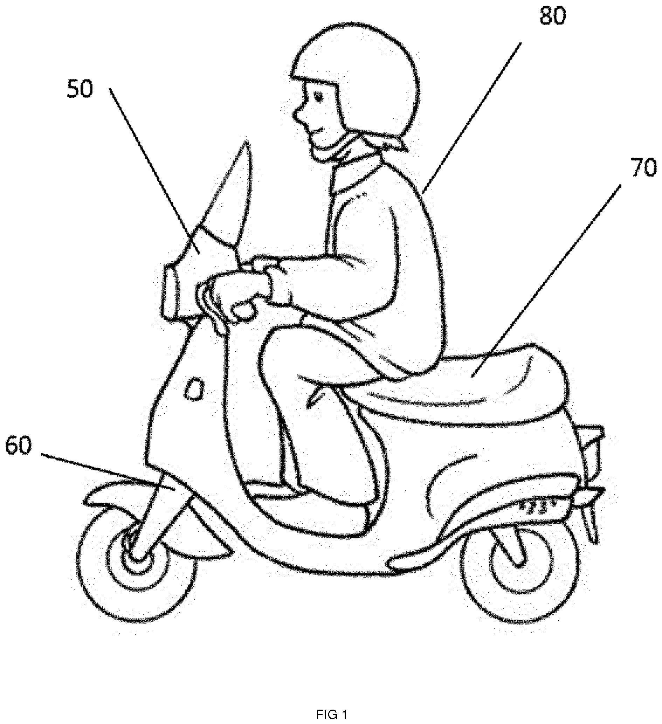

Figure 1 shows a view of a body-less vehicle on which the four blocks that comprise it have been indicated.

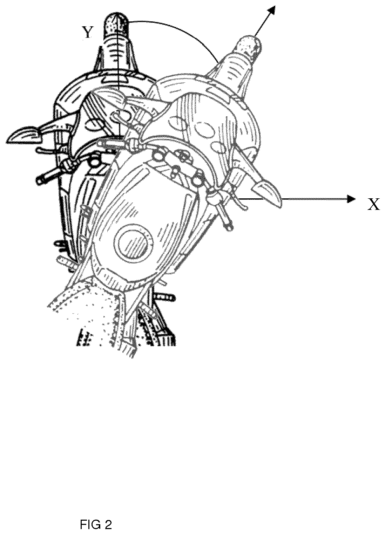

Figure 2 shows a front elevation view of a motorcycle where the coordinate axes "x" and "y" and the angle $\alpha$ that would be measured by the rotation sensor relative to said axis "y" are marked.

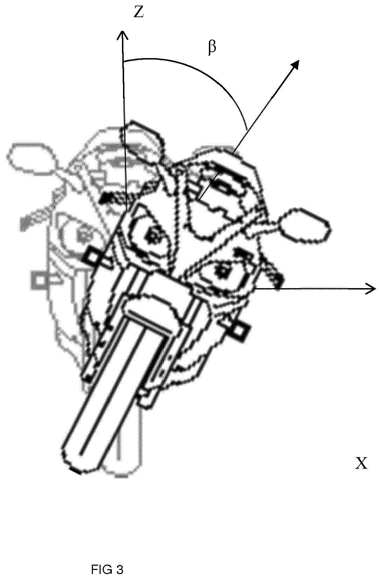

Figure 3 shows a side elevation view of a motorcycle where the coordinate axes "y" and "z" and the angle $\beta$ that would be measured by the equilibrium sensor relative to said axis "z" are marked.

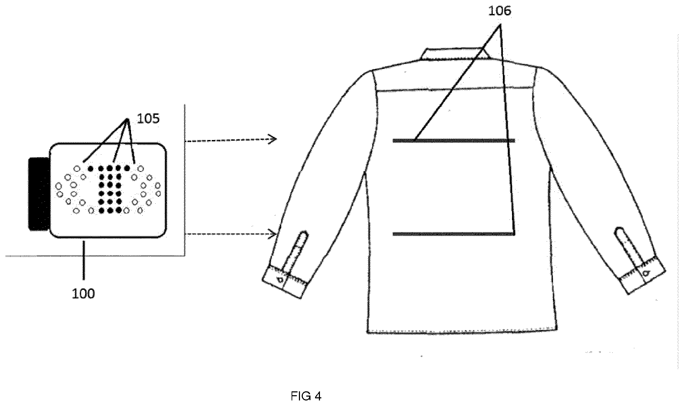

Figure 4 shows a view of the sheet (100) with its various incorporated elements on the line to adjust to the guides (106) on the user's jacket.

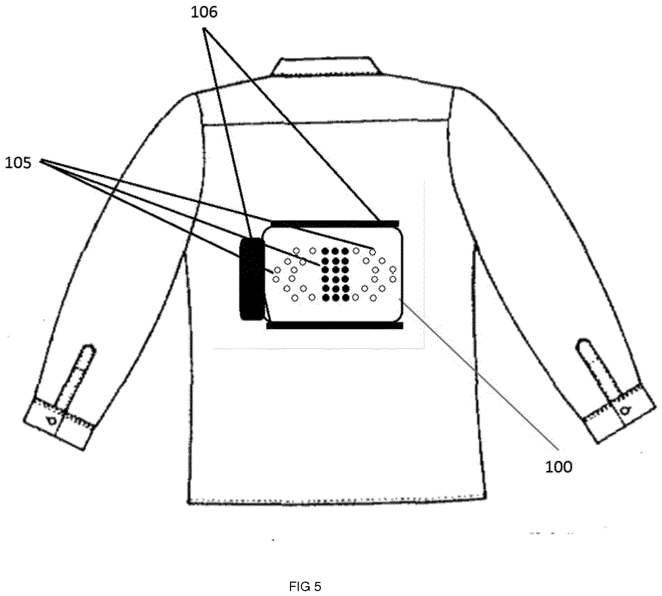

Figure 5 shows a view of the sheet (100) with its various elements incorporated, adjusted to the guides on the user's jacket.

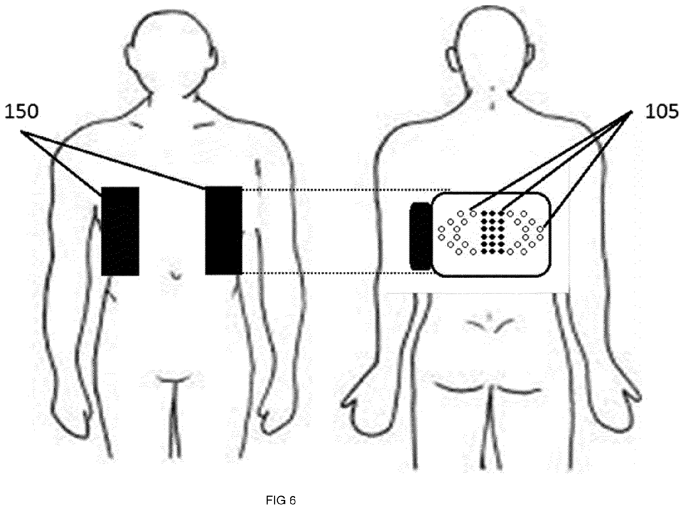

Figure 6 shows a front view and rear view of the initial part (150) adjusted on the body trunk of the user.

**First preferred embodiment of the invention**

The invention described herein is intended to improve the efficacy regarding the signalling and localization of users of vehicles without bodywork, both while circulating and in case of accidents, falling or any similar case.

The system comprises four blocks (50, 60, 70, 80) and wherein a first block (50) consists of at least one sensor, an emitter, a microprocessor and a battery, wherein said block (50) is located in an adapter next to and/or in contact with the vehicle handlebar switch. The first block (50) sensor can be piezoelectric, magnetic or accelerometer, gyroscope, inductive, pressure, optic, proximity type or like.

A second block (60) comprising at least one $\alpha$ handlebar rotation sensor, a microprocessor and an emitter, wherein said second block (60) is locates preferably on the front fork of the vehicle.

These first two blocks (50, 60) are responsible for capturing manoeuvres for left and right turns, abrupt decelerations and braking, thus, preferably will be located un an adapter next to and/or in contact with the vehicle handlebar switch. These blocks (50, 60) location will be anywhere in the vehicle enabling detection of the circulation manoeuvres mentioned above. However, capturing the right turn and left turn orders require a proximity or contact with the existing switch in the case of motorcycles. This device could be implemented in the switch of the vehicle itself.

A third block (70) composed of a signal receiver sensor, a microprocessor, at least a signal emitter, a vertical tilt $\beta$ sensor, a timer, a weight sensor and a primary circuit power emitter wirelessly, wherein said block is placed in the pilot's seat. The sensor receiver of the third block (70) receives signals sent by the emitter of the first block (50) and the emitter of the second block (60). The emitter of the first block (50) is the sender of the signal emitted by the microprocessor of the first block (50) to the receiver sensor of the third block (70), also the emitter of the second block (60) sends the signal processed by the microprocessor from the second block (60) to the receiver sensor of the third block (70).

This third block (70) can be considered as the "brain" that manages the system information. The implementation of this third block (70) is more or less recommended depending on the typology thereof and on functions intended to be provided, thus depending on the type of vehicle in which it will be necessary or dispensable housed. In any case, the location of the third block (70) is preferably one that allows easy access.

A fourth block (80) comprised by a signalling device incorporating a flexible sheet (100) inserted between at least two guides (106) parallel placed at a distance between them equal to the width of said flexible sheet (100) and arranged in the back of the jacket or other garment of the user and that allow insertion and fastening of said sheet (100) in the guides (106). The flexible sheet (100) includes an integrated circuit, a receiving sensor which receives the signal sent by the emitter of the third block (70), an emitter, a plurality of tracer elements (105), at least one microprocessor, an antenna, a secondary circuit power wireless receiver and a battery.

The emitter of the first block element (50) is in contact with the rotation sensor in the handlebar allowing a signal indicated by the handlebar angle $\alpha$ inside an imaginary horizontal plane "XY".

By measuring the $\beta$ inclination, i.e. the angle of inclination of the vehicle with the vertical and the time from which it started until it is reversed in each curve, the luminous elements of the sheet will illuminate (100) with the turn left signal if it is a left curve or with a right turn if it is a right curve, to warn other users of the road about the proximity of a curve or the one that the user is taking at the time. The rotation sensor $\alpha$ in the handlebar may be adapted to the drive switch in the handlebar if the manoeuvre is done manually in the case that the vehicle has its own switch, or in any other part of the vehicle such as the fork when the manoeuvre is detected automatically.

The overtaking manoeuvre activation signal corresponds to an algorithm in which the resulting as activation signal would be a function whose variables are the above mentioned and also includes the weight W of the whole vehicle-driver. The weight of the vehicle-driver set is calculated by estimating the average weight of the person and adding it to the one from the motorcycle, and subsequently introducing it in a mathematical algorithm. Logically, it is more accurate when implemented on motorcycles an electronic weight sensor, piezoelectric or similar in any parts thereof, for example under the seat.

Accordingly, the activation is a function of all these variables:

$$\text{Activation} = F\ (\ \alpha,\ \beta\ ,t,\ W\ )$$

The signalling elements shall be arranged at the back of the sheet (100) and placed in the user's back by two guides (106) placed on the jacket of the user or any other garment, the device also has a battery of small dimensions and easily transportable, with a high energy storage capacity and can be charged via a connecting element to the vehicle battery or by a last generation load generation system by proximity to the power source.

Likewise, the signalling device is also susceptible of charging by a wireless power transmission circuit between coils, since by electromagnetic pulses a secondary coil receives the electromagnetic pulses sent by the emitter coil converting them into electrical energy. The loading device comprises two coils of copper wire, a transistor and heat sink, a plurality of resistors, a diode bridge, at least one capacitor and a power supply.

One of the two coils called secondary coil is connected to the diode bridge, to the condenser and to the LED, the other coil referred to emitter coil is connected to the transistor, the heat sink, the resistors and the power source whatever the nature, in the case of bicycles it could be dynamo installed on the wheel. The advantage of this system is that when getting off the motorcycle or the bicycle, the lighting system would automatically deactivate, with the corresponding energy savings.

In case of emergency the vehicle is liable of having a sensing device for falls and a GPS-enabled emergency locator, that is, a device that through sensing the inclination angle of the motorcycle and / or other factors, can detect the status of the same and if it has suffered an accident or similar circumstance. Therefore, the device in this case may also be connected to the device sensing falls and emergency locator also through the emitter element in the first block, so that in addition to complying with emergency locator device function, it sends the signal to the flexible sheet placed on the back of the user, being able to locate both visually and aurally according to the signalling elements (105) integrated into said sheet.

That is, the device could be connected via the wireless emitter to any device that is implemented on the motorcycle, as GPS, tracking device for emergencies, accelerometer, falls detector device, braking and other sensors.

**Second preferred embodiment of the invention**

In a second preferred embodiment of the invention, the signalling device with the integrated circuit with the wireless receiver element, the microprocessor, the emitter and the signalling elements (105) may be coupled to the user through an initial piece (150) comprising: a main sheet consisting of a core and a coating. The core consists of a metal, plastic or similar sheet whereas the coating may be silicone, plastic, rubber or the like.

The initial piece (150) allows the carrier thereof a quick and proper fit to the trunk of the body. This adjustment is achieved through a previous process of rolling and bending said main sheet. Initially, the metal strip is straight longitudinally and transversely curve. This strip remains straight in the absence of voltage applied. Said sheet is subjected to a longitudinal winding and unwinding process, transferring suitable properties to be used as the core of the main sheet. The metal sheet is wrapped in a material as a protective coating that enables free movement thereof. This coating will be flexible, waterproof, breathable and odourless. This coating moves in solidarity with the sheet that serves as the core and which is housed inside.

Given the properties of this main sheet consisted of core and coating, a fixation to the body of the carrier method may be adopted based on the same principle of bending, wherein the signalling panel (106) will be arranged only on the back using a single initial piece (105).

The user can put on the initial piece 150) by a slight tap to the body, with which the bending of the main sheet can be achieved so that this embraces the trunk, slightly below the chest level and always on the front. Subsequently, the user proceeds to the rotation of said main sheet with the signalling device so that the integrated light panel remains perfectly embracing the back of the wearer. The rotation axis is a centered imaginary vertical line that goes through the body from head to feet. It is possible to achieve the same bending effect of the main sheet without tapping, that is, holding both ends of the main sheet and subjecting the element to bending stress along its longitudinal axis.

The initial piece (150) incorporates a circuit integrated with a plurality of signalling elements (105), an integrated circuit, an emitter, a receiver sensor, a plurality of signalling elements (105), a battery, an antenna and at least one microprocessor.

Due to its properties, this initial piece (150) fits optimally to the user's body and improves everything comparing to the prior art, since the incorporation into the user's clothing of signalling elements or guides for proper adjustment is not required.

The piece of material (150) may be plastic, metal, silicone, rubber or the like conferring it suitable flexibility properties.

**Claims**

1. Removable autonomous signalling system for cabinless vehicle users in which the users of bicycles, motorcycles and / or any type of vehicle without bodywork are signaled and displayed through a device that connects the user with the vehicle, **characterized in that** it comprises:

   a first block (50) constituted by at least one sensor, an emitter, a microprocessor and a battery, wherein said block is in contact with the vehicle handlebar switch;
   a second block (60) comprising at least one $\alpha$ rotation sensor in the handlebar, a microprocessor and an emitter, wherein said second block (60) is located preferably on the front fork of the vehicle;
   a third block (70) composed of a signal receiver sensor, a microprocessor, at least a signal emitter, a vertical tilt $\beta$ sensor, a timer, a weight sensor and a primary circuit power emitter wirelessly, wherein said block is placed in the pilot's SEAT;
a fourth block (80) comprised by a signalling device incorporating a flexible sheet (100) inserted between at least two guides (106) parallel placed at a distance between them equal to the width of said flexible sheet (100) and arranged in the back of the jacket or other garment of the user and that allow insertion and fastening of said sheet (100) in the guides (106).

2. Removable autonomous signalling system for cabinless vehicle users, according to claim 1, **characterized in that** the sensor of the first block (1) can be piezoelectric, magnetic or the accelerometer, gyroscope, inductive, pressure, light, proximity or similar type.

3. Removable autonomous signalling system for cabinless vehicle users, according to claim 1, **characterized in that** the emitter of the first block (50) sends the signal emitted by the microprocessor from the first block to the third block sensor receiver.

4. Removable autonomous signalling system for cabinless vehicle users, according to claim 1, **characterized in that** the receiver of the third block (70) receives the signals sent from the emitter of the first block (50) and the emitter of the second block (60).

5. Removable autonomous signalling system for cabinless vehicle users, according to claim 1, **characterized in that** the emitter of the second block (60) sends the signal processed by the microprocessor from the second block (60) to the third block sensor receiver (70).

6. Removable autonomous signalling system for cabinless vehicle users, according to claim 1, **characterized in that** the fourth block (80) includes a receiving sensor in the flexible sheet (100) receiving the signal sent by the emitter of the third block (3).

7. Removable autonomous signalling system for cabinless vehicle users, according to claims 1 and 6, **characterized in that** the flexible sheet (100) includes an integrated circuit, an emitter, a plurality of signalling elements (105), a battery, an antenna and at least one microprocessor.

8. Removable autonomous signalling system for cabinless vehicle users, according to preceding claim, **characterized in that** the loading device comprises two coils of copper wire, a transistor and heat sink, a plurality of resistors, a diode bridge, at least one capacitor and a power supply.

9. Removable autonomous signalling system for cabin-less vehicle users, according to preceding claims, **characterized in that** the is capable of having a falling detector and emergency locator with GPS connected to the microcontroller (103), which through the angle of inclination of the motorcycle can detect an accident or the like.

10. Removable autonomous signalling system according to claim 1, **characterized in that** the main sheet (100) consistent of a core and a coating, wherein the core is formed by a preferably metallic or plastic foil, whereas the coating may be silicone, plastic, rubber or the like and wherein the main sheet allows the wearer to fit it to the trunk of the body through a previous winding and bending process of said main sheet (100), and includes a signalling device with an integrated circuit, consisting of at least a wireless receiver element; at least one microcontroller and a plurality of signalling elements (105).

11. Removable autonomous signalling system according to claims 1 and 10 **characterized in that** the signalling elements (105) are lightning devices.

12. Removable autonomous signalling system according to claims 1 and 10 **characterized in that** the metal sheet (100) is wrapped with a material as a protective coating that enables free movement.

13. Removable autonomous signalling system according to claims 1 and 10 **characterized in that** the coating is moved jointly with the sheet that serves as the core and which is housed inside.

### Patentansprüche

1. Autonmome, entfernbare Signalanlage für Nutzer von Fahrzeugen ohne Kabine, in welcher die Nutzer von Fahrrädern, Motorrädern und/oder jeder Art von Fahrzeug ohne Karosserie durch eine Vorrichtung, die den Nutzer mit dem Fahrzeug verbindet, signalisiert und angezeigt werden, **dadurch gekennzeichnet, dass** sie Folgendes umfasst:

   einen ersten Block (50), der aus mindestens einem Sensor, einem Emitter, einem Mikroprozessor und einer Batterie besteht, wobei der Block in Verbindung mit dem Schalter der Fahrzeuglenkstange steht;
   einen zweiten Block (60), aufweisend mindestens einen $\alpha$-Rotationssensor in der Lenkstange, einen Mikroprozessor und einen Emitter, wobei der zweite Block (60) vorzugsweise an der vorderen Gabel des Fahrzeugs angeordnet ist;
   einen dritten Block (70), der aus einem Signalempfangssensor, einem Mikroprozessor, mindestens einem Signalemitter, einem vertikalen $\beta$-Neigungssensor, einem Zeitmesser, einem Gewichtssensor und einem drahtlosen Emitter des Primärstromkreises aufgebaut ist, wobei der Block in dem SITZ des Fahrzeugführers platziert ist;
einen vierten Block (80), der eine Signalvorrichtung umfasst, die eine flexible Platte (100), die zwischen mindestens zwei Führungen (106) eingesetzt ist, die parallel mit einem Abstand dazwischen, der gleich der Breite der flexiblen Platte (100) ist, platziert sind und in der Rückseite der Jacke oder eines anderen Kleidungsstücks des Nutzers angeordnet sind und die das Einsetzen und Befestigen der Platte (100) in den Führungen (106) erlauben.

2. Autonmome, entfernbare Signalanlage für Nutzer von Fahrzeugen ohne Kabine nach Anspruch 1, **dadurch gekennzeichnet, dass** der Sensor des ersten Blocks (1) vom piezoelektrischen, magnetischen oder Beschleunigungsmesser-, Kreisel-, induktiven, Druck-, Licht-, Nähe- oder ähnlichen Typ sein kann.

3. Autonmome, entfernbare Signalanlage für Nutzer von Fahrzeugen ohne Kabine nach Anspruch 1, **dadurch gekennzeichnet, dass** der Emitter des ersten Blocks (50) das Signal sendet, das durch den Mikroprozessor von dem ersten Block zu dem Sensorempfänger des dritten Blocks emittiert wird.

4. Autonmome, entfernbare Signalanlage für Nutzer von Fahrzeugen ohne Kabine nach Anspruch 1, **dadurch gekennzeichnet, dass** der Empfänger des dritten Blocks (70) die Signale empfängt, die von dem Emitter des ersten Blocks (50) und dem Emitter des zweiten Blocks (60) gesendet werden.

5. Autonmome, entfernbare Signalanlage für Nutzer von Fahrzeugen ohne Kabine nach Anspruch 1, **dadurch gekennzeichnet, dass** der Emitter des zweiten Blocks (60) das durch den Mikroprozessor verarbeitete Signal von dem zweiten Block (60) zu dem Sensorempfänger (70) des dritten Blocks sendet.

6. Autonmome, entfernbare Signalanlage für Nutzer von Fahrzeugen ohne Kabine nach Anspruch 1, **dadurch gekennzeichnet, dass** der vierte Block (80) einen Empfangssensor in der flexiblen Platte (100) einschließt, der das Signal empfängt, das durch den Emitter des dritten Blocks (3) gesendet wird.

7. Autonmome, entfernbare Signalanlage für Nutzer von Fahrzeugen ohne Kabine nach Anspruch 1 und 6, **dadurch gekennzeichnet, dass** die flexible Platte (100) eine integrierte Schaltung, einen Emitter, mehrere Signalelemente (105), eine Batterie, eine Antenne und mindestens einen Mikroprozessor einschließt.

8. Autonmome, entfernbare Signalanlage für Nutzer von Fahrzeugen ohne Kabine nach einem der vorhergehenden Ansprüche, **dadurch gekennzeichnet, dass** die Ladevorrichtung zwei Spulen aus Kupferdraht, einen Transistor und Kühlkörper, eine Diodenbrücke, mindestens einen Kondensator und eine Energieversorgung umfasst.

9. Autonmome, entfernbare Signalanlage für Nutzer von Fahrzeugen ohne Kabine nach einem der vorhergehenden Ansprüche, **dadurch gekennzeichnet, dass** der, die, das in der Lage ist, einen Sturzmelder und eine Notrufortung mit GPS aufzuweisen, das mit der Mikrosteuerung (103) verbunden ist, welche durch den Neigungswinkel des Motorrads einen Unfall oder Ähnliches erkennen kann.

10. Autonmome, entfernbare Signalanlage für Nutzer von Fahrzeugen ohne Kabine nach Anspruch 1, **dadurch gekennzeichnet, dass** die Hauptplatte (100) aus einem Kernstück und einer Beschichtung besteht, wobei das Kernstück vorzugsweise durch eine Metall- oder Kunststofffolie ausgebildet ist, während die Beschichtung Silikon, Kunststoff, Gummi oder dergleichen sein, kann und wobei es die Hauptplatte dem Träger ermöglicht, sie durch ein Winde- und Biegeverfahren der Hautpplatte (100) an dem Rumpf des Körpers zu befestigen, und wobei sie eine Signalvorrichtung mit einer integrierten Schaltung, die aus mindestens einem drahtlosen Empfangselement besteht; mindestens eine Mikrosteuerung und mehrere Signalelemente (105) einschließt.

11. Autonmome, entfernbare Signalanlage für Nutzer von Fahrzeugen ohne Kabine nach Anspruch 1 and 10, **dadurch gekennzeichnet, dass** die Signalelemente (105) Beleuchtungsvorrichtungen sind.

12. Autonmome, entfernbare Signalanlage für Nutzer von Fahrzeugen ohne Kabine nach Anspruch 1 und 10, **dadurch gekennzeichnet, dass** die Metallplatte (100) mit einem Werkstoff umhüllt ist, der freie Bewegung ermöglicht.

13. Autonmome, entfernbare Signalanlage für Nutzer von Fahrzeugen ohne Kabine nach Anspruch 1 und 10, **dadurch gekennzeichnet, dass** sich die Beschichtung zusammen mit der Platte, die als das Kernstück dient und im Inneren aufgenommen ist, bewegt.

## Revendications

1. Système de signalisation autonome amovible pour les utilisateurs de véhicules sans cabine dans lequel les utilisateurs de bicyclettes, de motocyclettes et/ou tout type de véhicule sans carrosserie sont signalés et exposés à travers un dispositif qui relie l'utilisateur au véhicule, **caractérisé en ce qu'**il comprend :

   un premier bloc (50) constitué d'au moins un capteur, un émetteur, un microprocesseur et une batterie, dans lequel ledit bloc est en contact avec le commutateur de guidon du véhicule ;
   un deuxième bloc (60) comprenant au moins un capteur de rotation $\alpha$ dans le guidon, un microprocesseur et un émetteur, dans lequel ledit deuxième bloc (60) est situé de préférence sur la fourche avant du véhicule ;
   un troisième bloc (70) composé d'un capteur récepteur de signal, un microprocesseur, au moins un émetteur de signal, une inclinaison verticale (3 capteurs, une minuterie, un capteur de poids et un émetteur d'alimentation du circuit primaire sans fil, dans lequel ledit bloc est placé dans le SIÈGE du pilote ;
   un quatrième bloc (80) constitué d'un dispositif de signalisation incorporant une feuille flexible (100) insérée entre au moins deux guides (106) parallèles placés à une distance entre eux égale à la largeur de ladite feuille flexible (100) et disposés à l'arrière de la veste ou autre vêtement de l'utilisateur et qui permettent l'insertion et la fixation de ladite feuille (100) dans les guides (106).

2. Système de signalisation autonome amovible pour les utilisateurs de véhicules sans cabine, selon la revendication 1, **caractérisé en ce que** le capteur du premier bloc (1) peut être piézoélectrique, magnétique ou l'accéléromètre, le gyroscope, inductif, la pression, la lumière, la proximité ou type similaire.

3. Système de signalisation autonome amovible pour les utilisateurs de véhicules sans cabine, selon la revendication 1, **caractérisé en ce que** l'émetteur du premier bloc (50) envoie le signal émis par le microprocesseur du premier bloc au récepteur du capteur du troisième bloc.

4. Système de signalisation autonome amovible pour les utilisateurs de véhicules sans cabine, selon la revendication 1, **caractérisé en ce que** le récepteur du troisième bloc (70) reçoit les signaux envoyés par l'émetteur du premier bloc (50) et l'émetteur du deuxième bloc (60).

5. Système de signalisation autonome amovible pour les utilisateurs de véhicules sans cabine, selon la revendication 1, **caractérisé en ce que** l'émetteur du deuxième bloc (60) envoie le signal traité par le microprocesseur du deuxième bloc (60) au récepteur du capteur du troisième bloc (70).

**6.** Système de signalisation autonome amovible pour les utilisateurs de véhicules sans cabine, selon la revendication 1, **caractérisé en ce que** le quatrième bloc (80) comporte un capteur de réception dans la feuille flexible (100) recevant le signal envoyé par l'émetteur du troisième bloc (3).

**7.** Système de signalisation autonome amovible pour les utilisateurs de véhicules sans cabine, selon les revendications 1 et 6, **caractérisé en ce que** la feuille flexible (100) comporte un circuit intégré, un émetteur, une pluralité d'éléments de signalisation (105), une batterie, une antenne et au moins un microprocesseur.

**8.** Système de signalisation autonome amovible pour les utilisateurs de véhicules sans cabine, selon la revendication précédente, **caractérisé en ce que** le dispositif de chargement comprend deux bobines de fil de cuivre, un transistor et un radiateur, une pluralité de résistances, un pont de diodes, au moins un condensateur et une alimentation électrique.

**9.** Système de signalisation autonome amovible pour les utilisateurs de véhicules sans cabine, selon les revendications précédentes, **caractérisé en ce que** le peut avoir un détecteur de chute et un localisateur d'urgence avec GPS connecté au microcontrôleur (103), qui, grâce à l'angle d'inclinaison du motocycle, peut détecter un accident ou similaire.

**10.** Système de signalisation autonome amovible selon la revendication 1, **caractérisé en ce que** la feuille principale (100) consiste en un noyau et un revêtement, dans lequel le noyau est formé d'un film de préférence métallique ou plastique, tandis que le revêtement peut être le silicone, le plastique, le caoutchouc ou similaire et dans lequel la feuille principale permet au porteur de l'ajuster sur le tronc du corps à travers un processus de bobinage et de pliage préalable de ladite feuille principale (100), et comporte un dispositif de signalisation avec un circuit intégré, consistant en au moins un élément récepteur sans fil ; au moins un microcontrôleur et une pluralité d'éléments de signalisation (105).

**11.** Système de signalisation autonome amovible selon les revendications 1 et 10, **caractérisé en ce que** les éléments de signalisation (105) sont des dispositifs d'éclairage.

**12.** Système de signalisation autonome amovible selon les revendications 1 et 10, **caractérisé en ce que** la feuille métallique (100) est enveloppée d'un matériau tel qu'un revêtement protecteur qui permet une liberté de mouvement.

**13.** Système de signalisation autonome amovible selon les revendications 1 et 10, **caractérisé en ce que** le revêtement est déplacé conjointement avec la feuille qui sert de noyau et qui est logée à l'intérieur.

FIG 1

FIG 2

Z

β

X

FIG 3

FIG 4

106

105

100

FIG 5

FIG 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6388422 B
- GB 2382297 A
- WO 2011061663 A
- WO 2005020731 A
- US 2007063831 A